# EUROPÄISCHE PATENTANMELDUNG

(11) **EP 4 056 664 A1**
(43) Veröffentlichungstag der Anmeldung: **14.09.2022**
(21) Anmeldenummer: 21161682.6
(22) Anmeldetag: 10.03.2021
(51) Int. Cl.: C09K 5/20, C23F 11/18

(54) **FESTE KÜHLMITTELKONZENTRATE UND DEREN HERSTELLUNG**

(71) Anmelder: BASF SE, 67056 Ludwigshafen am Rhein (DE)
(72) Erfinder: DIETL, Harald, 67056 Ludwigshafen (DE); NITZSCHKE, Uwe, 67056 Ludwigshafen (DE); SANDOR, Mario, 67056 Ludwigshafen (DE); SCHMITZ, Ruediger, 69469 Weinheim (DE)
(74) Vertreter: BASF IP Association

(57) **Zusammenfassung**

Die vorliegende Erfindung beschreibt neue Kühlmittelkonzentrate, deren Herstellung und Verwendung.

## Beschreibung

Die vorliegende Erfindung beschreibt neue Kühlmittelkonzentrate, deren Herstellung und Verwendung.

Bei Kühlmitteln zur Anwendung in mobilen oder stationären Verbrennungsmotoren, aber auch in Kühlkreisläufen von Elektrofahrzeugen oder Kombinationen von Fahrzeugen mit Elektro- und Verbrennungsmotoren durch den Endanwender handelt es sich im allgemeinen um flüssige Mischungen aus Wasser, Glykolen, Korrosionsinhibitoren, Basen und weiteren Bestandteilen.

Um die zu transportierenden Volumina zu verringern, werden zumeist Konzentrate vertrieben, in denen der Wasseranteil weggelassen oder stark reduziert wird. Die Kühlmittel werden vom Endanwender aus den Konzentraten durch Wasserzugabe hergestellt.

Zur weiteren Verringerung der zu transportierenden Volumina werden oftmals sogenannte Superkonzentrate zentral hergestellt, in denen nicht nur der Wasser-, sondern zusätzlich auch der Glykolanteil weggelassen oder stark reduziert ist. Aus diesen Superkonzentraten werden dann erst regional von Formulierern durch Abmischung mit Glykolen die Konzentrate hergestellt.

Trotz dieser beschriebenen Konzentrate besteht immer noch Bedarf an einer weiteren Reduzierung der zu transportierenden Volumina, um die Logistik zu vereinfachen, Transportkapazitäten einzusparen und den Einfluß des Transports auf die Umwelt zu verringern.

Im Handel befinden sich hochkonzentrierte oder teilweise feste Kühlmittelzusätze, engl. supplemental cooling additives (SCA), die vom Endanwender in ein im Gebrauch befindliches Kühlmittel gegeben werden und die während des Betriebs verbrauchten Korrosionsinhibitoren und Basen auffüllen sollen. Durch ihre konzentrierte Form sind sie nicht in der Lage Wasser oder Glykole im Kühlmittel aufzufüllen.

Derartige SCAs werden beispielsweise beschrieben in US 5643493 oder US 6733687.

Die US 5643493 beschreibt derartige SCAs wonach als Korrosionsinhibitoren lediglich anorganische Verbindungen eingesetzt werden, wie Phosphate, Silicate, Borate, Nitrite, Nitrate und Molybdate. Einzige organische Klasse von Korrosionsinhibitoren sind Azole.

Die in den heutigen Kühlmitteln als Korrosionsinhibitoren häufig eingesetzten organischen Carbonsäuren werden nicht beschrieben.

US 6733687 beschreibt SCAs, die als Feststoff, Paste oder flüssiges Konzentrat eingesetzt werden können und aromatische Monocarbonsäuren oder Dicarbonsäuren neben anorganischen Bestandteilen und Azolen.

Zwingend erforderlicher Bestandteil der SCAs gemäß der US 6733687 sind Nitrite, insbesondere Natrium Nitrit (NaNO₂) als Inhibitor gegen die Korrosion von Eisenwerkstoffen. Da Nitrite jedoch eine ausgeprägte Toxizität aufweisen, soll auf deren Einsatz verzichtet werden. Typischerweise werden Nitrite als Inhibitoren gegen die Korrosion von Eisenwerkstoffen durch aliphatische Monocarbonsäuren ersetzt, siehe US 9328278.

Der Fachmann, der versucht feste Mischungen in Analogie zur US 6733687 herzustellen und dabei Nitrite durch aliphatische Monocarbonsäuren ersetzt, wird dabei jedoch feststellen, daß die Anwesenheit aliphatischer Monocarbonsäuren dazu führt, daß die erhaltenen Mischungen klebrig und somit nicht in eine feste Anwendungsform überführbar sind. Schüttungen von festen Mischungen würden verkleben und somit nicht frei rieselfähig bleiben, wodurch Lagerung, Transport und die technische Anwendung erheblich erschwert werden würde.

Aufgabe der vorliegenden Erfindung war es also, feste Kühlmittelkonzentrate zur Verfügung zu stellen, die leicht in eine stabile, feste Anwendungsform überführbar und nitritfrei sind, dabei aber eine gute Inhibierung der Korrosion von Eisenwerkstoffen aufweisen.

Die Aufgabe wurde gelöst durch nitritfreie, zur Herstellung flüssiger Gefrierschutzmittel für Kühlsysteme mit Korrosionsschutzwirkung geeignete feste Zusammensetzungen, enthaltend
- nicht mehr als 10, bevorzugt nicht mehr als 7,5 und besonders bevorzugt nicht mehr als 5 Gew% Wasser (A)
- nicht mehr als 10, bevorzugt nicht mehr als 7,5 und besonders bevorzugt nicht mehr als 5 Gew% Alkylenglykol, Alkylenglykolmonoalkylether und Glycerin (B),
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 90 bis 95 Gew% beträgt,
- der Anteil an aliphatischen Monocarbonsäuren an der gesamten Zusammensetzung 1 Gew% nicht übersteigt,
- der Anteil an Nitriten an der gesamten Zusammensetzung 0,25 Gew% nicht übersteigt und
- die Summe aller Komponenten stets 100 Gew% ergibt.

Die erfindungsgemäßen Zusammensetzungen lassen sich leicht in fester Form herstellen, sind durch die Abwesenheit von Nitriten toxikologisch weniger bedenklich und lassen sich leicht zu Superkonzentraten, Konzentraten und Kühlmitteln verarbeiten.

Zudem stellen sie die höchstmöglich konzentrierte Form der Aktivkomponenten von Kühlmitteln dar, so daß bei ihrem Transport lediglich kleinstmögliche Mengen bewegt werden müssen, um dezentral aus den erfindungsgemäßen Zusammensetzungen Superkonzentrate, Konzentrate und Kühlmittel herstellen zu können. Dies stellt eine Ersparnis an Energie oder allgemein an CO₂-Äquivalenten und somit eine Verringerung der CO₂-Bilanz dar.

### Komponenten

### (A) Wasser

Das im Rahmen der vorliegenden Erfindung eingesetzte Wasser sollte neutral mit einem pH-Wert um 7 sein, dabei kann es sich um demineralisiertes oder destilliertes Wasser handeln, was jedoch nicht zwingend erforderlich ist. Um den Einsatz auch harten Wassers zu ermöglichen, enthält die erfindungsgemäße Zusammensetzung in der Regel mindestens einen Hartwasserstabilisator (siehe unten).

### (B) Alkylenglykol, Alkylenglykolmonoalkylether und Glycerin

Komponente (B) bewirkt in den Kühlmitteln die hauptsächliche Gefrierpunktserniedrigung. Dabei handelt es sich um monomere bis tetramere 1,2-Ethylenglykole, 1,2-Propylenglykole oder seltener um 1,3-Propylenglykole, bevorzugt um monomere bis trimere 1,2-Ethylenglykole oder 1,2-Propylenglykole, besonders bevorzugt um monomere oder dimere 1,2-Ethylenglykole, ganz besonders bevorzugt um monomeres 1,2-Ethylenglykol, sowie jeweils die Gemische davon.

Bei den Alkylenglykolmonoalkylethern handelt es sich um die Mono-C₁-C₄-alkylether der oben genannten Alkylenglykole, bevorzugt die Mono Methyl-, Ethyl- oder n-Butyl ether, besonders bevorzugt die Mono Methyl- oder n-Butyl ether und ganz besonders bevorzugt die Mono Methylether.

Ferner sind Glycerin oder Glycerinoligomere mögliche Komponenten (B).

Bevorzugte Alkylenglykol-Komponenten bzw. Derivate sind insbesondere Monoethylenglykol, Diethylenglykol, Triethylenglykol, Tetraethylenglykol und deren Gemische, daneben aber auch Monopropylenglykol, Dipropylenglykol und deren Gemische, Polyglykole, Glykolether, beispielsweise Monoethylenglykol monomethylether, Diethylenglykol monomethylether, Triethylenglykol monomethylether, Tetraethylenglykol monomethylether, Monoethylenglykol monoethylether, Diethylenglykol monoethylether, Triethylenglykol monoethylether, Tetraethylenglykol monoethylether, Monoethylenglykol mono-n-butylether, Diethylenglykol mono-n-butylether, Triethylenglykol mono-n-butylether und Tetraethylenglykol mono-n-butylether, oder Glycerin jeweils allein oder als Mischungen hieraus verwendet werden.

Besonders bevorzugt werden Monoethylenglykol allein oder Mischungen von Monoethylenglykol als Hauptkomponente, d.h. mit einem Gehalt in der Mischung von mehr als 50 Gew.-%, insbesondere von mehr als 80 Gew.-%, vor allem von mehr als 95 Gew.-%, mit anderen Alkylenglykolen oder Derivaten von Alkylenglykolen.

### Inhibitoren (C)

Die Inhibitoren (C) wirken als Korrosionsinhibitoren gegen Metallkorrosion, beispielsweise von Eisenwerkstoffen, Aluminium, Buntmetallen oder Lot.

Die erfindungsgemäßen Zusammensetzungen enthalten
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäure, die 4 bis 20 Kohlenstoffatome aufweist
- (C4) mindestens eine Azol, bevorzugt mindestens eine Triazolverbindung.

### Anorganische Inhibitoren (C1)

Bei den anorganischen Inhibitoren (C1) handelt es sich um Silikate, Borate, Nitrate, Molybdate oder Phosphate, oder deren Mischungen in Form ihrer freien Säuren oder ihrer Salze, besonders ihrer Alkalimetallsalze, besonders bevorzugt ihrer Natrium- oder Kaliumsalze. In welcher Form (protoniert oder als Salz) sie in den Zusammensetzungen, Superkonzentraten, Konzentraten oder Kühlmitteln vorliegen hängt von dem jeweiligen pKₛ-Wert der Verbindung und der Zusammensetzung sowie dem pH des jeweiligen Milieus ab, der sich durch die Menge der Base (D) einstellt.

Die anorganischen Silikate wirken überwiegend als Inhibitor der Korrosion von Aluminium und werden meist als Alkalimetallsalze oder seltener als Magnesium-, Calcium- oder Aluminiumsalze eingesetzt, bevorzugt als Natrium- oder Kaliumsalze.

Die Silikate sind bevorzugt ausgewählt aus der Gruppe bestehend aus Orthosilikaten (SiO₄⁴⁻), Metasilikaten (SiO₃²⁻), and Pyrosilikaten (Si₂O₇⁶⁻), besonders bevorzugt handelt es sich um Metasilikate (SiO₃²⁻), ganz besonders bevorzugt um Natriummetasilikat (Na₂SiO₃) oder Kaliummetasilikat (K₂SiO₃), insbesondere um Natriummetasilikat (Na₂SiO₃).

Wenn die erfindungsgemäße feste Zusammensetzung mindestens ein Silikat enthält, so wird in einer bevorzugten Ausführungsform zusätzlich zu dem Silikat mindestens ein Silicophosphonat zudosiert, wie es beschrieben ist in der unveröffentlichten Europäischen Patentanmeldung mit der Anmeldungsnummer 20213979.6 und dem Einreichedatum 15. Dezember 2020.

Bevorzugt handelt es sich bei dem Silicophosphonat um eine Verbindung der allgemeinen Formel 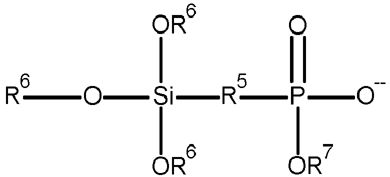 worin
R⁵ ein zweibindiger organischer Rest ist, bevorzugt eine 1,ω-Alkylen Gruppe mit 1 bis 6, bevorzugt 1 bis 4 Kohlenstoffatomen, besonders bevorzugt Methylen, 1,2-Ethylen, 1,2-Propylen, 1,3-Propylen oder 1,4-Butylen, ganz besonders bevorzugt 1,2-Ethylen oder 1,3-Propylen und insbesondere 1,2-Ethylen,
R⁶ unabhängig voneinander Wassertoff, C₁- bis C₄-Alkyl oder Hydroxy-C₂- bis C₄-Alkyl, bevorzugt Wasserstoff, Methyl, Ethyl, n-Propyl, iso-Propyl, n-Butyl, iso-Butyl, sec-Butyl oder tert-Butyl, 2-Hydroxyethyl oder 2-Hydroxypropyl, besonders bevorzugt Wasserstoff, Methyl, Ethyl oder Propyl,
und R⁷ ist C₁- bis C₄-Alkyl, bevorzugt Methyl, Ethyl, n-Propyl oder n-Butyl, besonders bevorzugt Methyl, Ethyl oder n-Butyl, ganz besonders bevorzugt Methyl oder Ethyl und insbesondere Methyl.

Die Silicophosphonate können als freie Säure oder als Alkalimetallsalz eingesetzt werden, bevorzugt als Natrium- oder Kaliumsalz und besonders bevorzugt als Natriumsalz.

Die Borate werden bevorzugt als Natriumtetraborat (Borax) oder als Kaliumtetraborat eingesetzt, besonders bevorzugt als Natriumtetraborat.

Die Nitrate werden als Alkali- oder Erdalkalimetallnitrate eingesetzt, bevorzugt als Natriumnitrat, Kaliumnitrat oder Magnesiumnitrat, bevorzugt als Natriumnitrat oder Kaliumnitrat, besonders bevorzugt als Natriumnitrat.

Die Phosphate werden als freie Säure (H₃PO₄), als Hydrogenphosphat, Dihydrogenphosphat oder Phosphat eingesetzt, bevorzugt als Natrium oder Kaliumsalz.

Denkbar ist auch der Einsatz der entsprechenden Diphosphate, Triphosphate oder Oligophosphate, bevorzugt werden sie jedoch als monomere Phosphate eingesetzt.

Bevorzugt ist der Einsatz als freie Säure (H₃PO₄), Dinatriumhydrogenphosphat oder Trinatriumphosphat.

Bevorzugt handelt es sich bei den Komponenten (C1) um mindestens eine Verbindung ausgewählt aus der Gruppe bestehend aus Silikaten, Boraten, Nitraten oder Phosphaten, besonders bevorzugt um mindestens eine Verbindung ausgewählt aus der Gruppe bestehend aus Silikaten, Nitraten oder Phosphaten.

### (C2a) Aromatische Monocarbonsäure

Bei der optionalen aromatischen Monocarbonsäure handelt es sich bevorzugt um Benzoesäure, die als freie Säure oder besonders bevorzugt in Form ihres Alkalimetallsalzes eingesetzt werden kann, ganz besonders bevorzugt bevorzugt als Natrium benzoat.

In einer bevorzugten Ausführungsform der vorliegenden Erfindung ist keine aromatische Monocarbonsäure anwesend.

### (C3) 4 bis 20 Kohlenstoffatome aufweisende organische Dicarbonsäure

Bei den 4 bis 20 Kohlenstoffatome aufweisenden organischen Dicarbonsäuren handelt es sich um lineare oder verzweigte Alkandicarbonsäuren, bevorzugt lineare Alkan- oder Alkendicarbonsäuren, besonders bevorzugt Alkandicarbonsäuren, besonders bevorzugt mit 5 bis 14 und ganz besonders bevorzugt mit 6 bis 12 Kohlenstoffatomen.

Bevorzugt sind die Dicarbonsäuren (C3) ausgewählt aus der Gruppe bestehend aus Bernsteinsäure, Maleinsäure, Fumarsäure, Glutarsäure, Adipinsäure, Pimelinsäure (Heptandisäure), Azelainsäure (Nonandisäure), Sebacinsäure (Dekandisäure), Undekandisäure, Dodekandisäure, sowie Alkyl- und Alkenylbernsteinsäuren und -glutarsäuren wie 2-Methylbutandisäure, 2-ethyl-3-methylbutandisäure, 2-Ethylpentandisäure, 2-Dodecylbutandisäure, 2-Dodecenylbutandisäure, 2-Phenylbutandisäure, 2-(p-Methyl phenyl) butandisäure, 2,2-Dimethylbutandisäure, 2,3,4-Trimethylpentandisäure, 2,2,3-Trimethylpentandisäure, Glutaconsäure (Pent-2-endisäure), Itaconsäure, Hex-2-endisäure, Hex-3-endisäure, 5-Methyl-hex-2-endisäure und 2,3-Diemethylpent-2-endisäure.

Unter diesen sind die Dicarbonsäuren bevorzugt, die 6 bis 12 Kohlenstoffatome aufweisen, besonders bevorzugt unter diesen die Alkandicarbonsäuren, die 6 bis 12 Kohlenstoffatome aufweisen, ganz besonders bevorzugt die linearen Alkandicarbonsäuren, die 6 bis 12 Kohlenstoffatome aufweisen.

Insbesondere bevorzugt sind als Dicarbonsäuren (D3) Adipinsäure, Sebacinsäure, Azelainsäure und Dodecandicarbonsäure.

### (C4) Azolverbindung

Unter Azolderivaten (C4) werden im Rahmen dieser Schrift fünfgliedrige heterocyclische Verbindungen mit 2 oder 3 Heteroatomen aus der Gruppe Stickstoff und Schwefel, welche kein oder maximal ein Schwefelatom in den Ring eingebaut enthalten und welche optional einen aromatischen oder gesättigten sechsgliedrigen Anellanten tragen können.

Diese fünfgliedrigen heterocyclischen Verbindungen (Azolderivate) enthalten als Heteroatome üblicherweise zwei N-Atome und kein S-Atom, 3 N-Atome und kein S-Atom oder ein N-Atom und ein S-Atom.

Bevorzugte Gruppen der genannten Azolderivate sind anellierte Imidazole und anellierte 1,2,3-Triazole der allgemeinen Formel 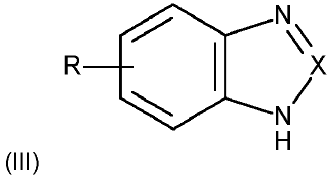 oder 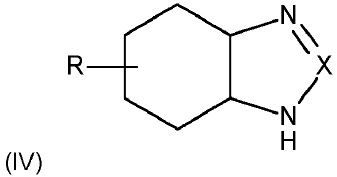 in denen die Variable
R Wasserstoff oder einen C₁- bis C₁₀-Alkylrest, insbesondere Methyl oder Ethyl, bedeutet und die Variable X ein Stickstoffatom oder die Gruppierung C-H bezeichnet.

Typische und bevorzugte Beispiele für Azolderivate der allgemeinen Formel (III) sind Benzimidazol (X = C-H, R = H), Benzotriazol (X = N, R = H) und Tolutriazol (Tolyltriazol) (X = N, R = CH₃). Ein typisches Beispiel für ein Azolderivat der allgemeinen Formel (IV) ist hydriertes 1,2,3-Tolutriazol (Tolyltriazol) (X = N, R = CH₃).

Eine weitere bevorzugte Gruppe der genannten Azolderivate sind Benzthiazole der allgemeinen Formel (V) 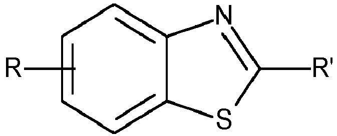 in der
die Variable R die oben genannte Bedeutung hat und
die Variable R' Wasserstoff, einen C₁- bis C₁₀-Alkylrest, insbesondere Methyl oder Ethyl, oder insbesondere eine Mercaptogruppe (-SH) bezeichnet. Denkbar, wenn auch weniger bevorzugt kann R' auch ein Carboxyalkylrest der Formel -(CₘH₂ₘ)-COOR" sein, wobei m für eine Zahl von 1 bis 4 steht und R" Wasserstoff oder C₁- bis C₁₀-Alkyl, insbesondere Methyl oder Ethyl, oder C₆- bis C₁₂-Aryl bedeutet. Beispiele dafür sind (2-Benzothiazylthio)-essigsäure, (2-Benzothiazylthio)-essigsäure ester, 3-(2-Benzothiazylthio)-propionsäure oder 3-(2-Benzothiazylthio)-propionsäure ester. Für den Fall, daß diese Verbindungen als Säure eingesetzt werden, so zählen sie nicht zu den erfindungsgemäß ausgeschlossenen Carbonsäuren. Ein typisches Beispiel für ein Azolderivat der allgemeinen Formel (V) ist 2-Mercaptobenzthiazol.

Weiterhin werden nicht-anellierte Azolderivate der allgemeinen Formel (VI) 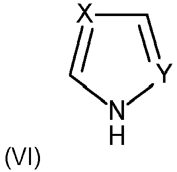 in der die Variablen
X und Y zusammen zwei Stickstoffatome oder
ein Stickstoffatom und eine Gruppierung C-H bezeichnen,
beispielsweise 1H-1,2,4-Triazol (X = Y = N) oder bevorzugt Imidazol (X = N, Y = C-H).

Ganz besonders bevorzugt werden für die vorliegende Erfindung als Azolderivate Benzimidazol, Benzotriazol, Tolutriazol, hydriertes Tolutriazol oder Mischungen hieraus, insbesondere Benzotriazol oder Tolutriazol, speziell Tolutriazol.

Die genannten Azolderivate sind kommerziell verfügbar oder nach gängigen Methoden herstellbar. Hydrierte Benzotriazole wie hydriertes Tolutriazol sind ebenfalls gemäß DE-A 1 948 794 zugänglich und auch kommerziell verfügbar.

Bevorzugt sind die Azole ausgewählt aus der Gruppe bestehend aus Benzotriazol, Tolutriazol, (2-Benzothiazylthio)-essigsäure, 3-(2-Benzothiazylthio)-propionsäure und 2-Mercaptobenzthiazol.

### (D) Anorganische Base

Der pH-Wert der Gefrierschutzmittel beim Endanwender liegt üblicherweise im Bereich von 4 bis 11,5, vorzugsweise 5 bis 10, insbesondere 6 bis 9.

Um diesen pH-Wert einzustellen werden bei dem Herstellungsverfahren der Kühlmittel aus einer konzentrierten Vorstufe auf einer beliebigen Stufe mindestens eine anorganische Base (D) zugegeben. Dabei kann die mindestens eine anorganische Base in der erfindungsgemäßen Zusammensetzung, im Superkonzentrat oder im Konzentrat enthalten sein oder bei der Herstellung des Superkonzentrats aus der erfindungsgemäßen Zusammensetzung durch Vermischen mit der Komponente (A) und/oder (B), bei der Herstellung des Konzentrats aus dem Superkonzentrat durch Vermischen mit der Komponente (A) und/oder (B) oder bei der Herstellung des Kühlmittels aus dem Konzentrat durch Vermischen mit der Komponente (A) und/oder (B) zugegeben werden.

Daher enthalten die erfindungsgemäßen Zusammensetzungen optional eine Menge an anorganischer Base, die bei entsprechender Verdünnung im Kühlmittel diesen gewünschten pH-Wert einstellt. Dafür enthalten die erfindungsgemäßen Zusammensetzungen bevorzugt Alkalimetallhydroxid, besonders bevorzugt festes Lithium-, Natrium- oder Kaliumhydroxid, gegebenenfalls auch in Form von wässriger Lithium-, Natron- oder Kalilauge.

Weniger bevorzugt sind Carbonate oder Hydrogencarbonate des Lithium, Natrium oder Kalium.

Bevorzugte Alkalimetalle sind Natrium und Kalium.

In einer bevorzugten Ausführungsform ist zumindest ein Teil der anorganischen Base, bevorzugt die gesamte erforderliche anorganische Base bereits in der erfindungsgemäßen Zusammensetzung enthalten. Dies hat einerseits den Vorteil, daß die Base auf keiner späteren Herstellungsstufe mehr zugegeben werden muß und somit die Gefahr einer Fehldosierung entfällt, andererseits liegen die zugegebenen Säuren dadurch in Form ihrer zumeist leichter kristallisierenden Alkalimetallsalzform vor, was die Formulierung der festen erfindungsgemäßen Zusammensetzung als Feststoff erleichtert.

### (E) Sonstige Bestandteile, ausgewählt aus der Gruppe bestehend aus Hartwasserstabilisatoren, Entschäumer, Farbstoffe und Bitterstoffe

Als weitere übliche Hilfsmittel können die erfindungsgemäßen Zusammensetzung in üblichen geringen Mengen noch Entschäumer (in der Regel in Mengen von 0,003 bis 0,008 Gew.-% in dem fertig verdünnten Kühlmittel) sowie aus Gründen der Hygiene und der Sicherheit im Falle eines Verschluckens Bitterstoffe (z. B. vom Typ Denatoniumbenzoat) und Farbstoffe enthalten.

Ferner können die Zusammensetzung einen oder mehrere Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen enthalten. Der Anteil in der Zusammensetzung werden so gewählt, daß nach entsprechender Verdünnung die Menge in dem fertig verdünnten Kühlmittel bis zu 1 Gew.-% beträgt.

Erfindungsgemäß ausgeschlossen als Bestandteile der erfindungsgemäßen Zusammensetzungen sind aliphatischen Monocarbonsäuren und Nitrite. Deren Anwesenheit ist bevorzugt lediglich soweit akzeptabel, wie sie als technische oder technisch bedingte Verunreinigungen in den anderen Komponenten, besonders in Nitraten als Komponente (C1) und Dicarbonsäuren (C3) enthalten sind.

### Aliphatische Monocarbonsäuren

Die in den erfindungsgemäßen Zusammensetzungen ausdrücklich ausgeschlossenen Monocarbonsäuren sind organische aliphatische Alkan- oder Alkencarbonsäuren. Diese werden, ausreichende Wasserlöslichkeit vorausgesetzt, in Kühlmitteln häufig als Korrosionsinhibitoren gegen die Korrosion von Eisenwerkstoffen eingesetzt.

Typische derartige Monocarbonsäuren sind Pentansäure, 2,2-Dimethylpropansäure, Hexansäure, 2,2-Dimethylbutansäure, Octansäure, 2-Ethylhexansäure, Nonansäure, Isononansäure, Decansäure, Undecansäure und Dodecansäure, sowie deren Isomerengemische, insbesondere 2-Ethylhexansäure und Isononansäure-Isomerengemische.

Derartige Monocarbonsäuren sind flüssig oder weisen einen niedrigen Schmelzpunkt, beispielsweise von nicht mehr als 50 °C auf, so daß sich mit den freien Säuren keine festen Zusammensetzungen herstellen lassen, bzw. die erhaltenen Zusammensetzungen kleben, wachsartig werden und/oder bei einer Lagerung verbacken würden.

Da nicht ausgeschlossen werden kann, daß sich aus den oben erwähnten, in den erfindungsgemäßen Zusammensetzungen enthaltenen Dicarbonsäuren (C3) durch Decarboxylierung derartige Monocarbonsäuren bilden können, gelten die erfindungsgemäßen Zusammensetzungen als frei von diesen Monocarbonsäuren, wenn der Anteil an diesen erfindungsgemäß ausdrücklich ausgeschlossenen Monocarbonsäuren in den erfindungsgemäßen Zusammensetzungen 1 Gew% nicht überschreitet, beispielsweise 0,5 Gew%, bevorzugt nicht mehr als 0,3 Gew%, besonders bevorzugt nicht mehr als 0,2, ganz besonders bevorzugt nicht mehr als 0,1 und insbesondere nicht mehr als 0,05 Gew%. Speziell sind keine Monocarbonsäuren enthalten.

Es stellt jedoch eine mögliche, wenn auch weniger bevorzugte Ausführungsform der vorliegenden Erfindung dar, die aliphatischen Monocarbonsäuren in Form ihrer Alkalimetallsalze, bevorzugt in Form ihrer Lithium-, Natrium- oder Kaliumsalze, besonders bevorzugt in Form ihrer Natrium- oder Kaliumsalze anstelle der freien Säure einzusetzen, wenn die betreffenden Salze der aliphatischen Monocarbonsäuren bei Raumtemperatur (20 °C) fest oder zumindest seifig sind.

In diesem Fall können die festen Zusammensetzungen bis zu 15 Gew% des Alkalimetallsalzes der aliphatischen Monocarbonsäuren enthalten, bevorzugt bis zu 12,5 Gew%, besonders bevorzugt bis zu 10 Gew%, ganz besonders bevorzugt bis zu 7,5 Gew% und insbesondere bis zu 5 Gew%.

Die aus derartigen festen Zusammensetzungen durch Verdünnung mit (A) und/oder (B) erhaltenen Superkonzentrate können dementsprechend bis zu 10 Gew% des Alkalimetallsalzes der aliphatischen Monocarbonsäuren enthalten, bevorzugt bis zu 7,5 Gew%, besonders bevorzugt bis zu 5 Gew%, ganz besonders bevorzugt bis zu 3 Gew% und insbesondere bis zu 1 Gew%.

Die aus derartigen festen Zusammensetzungen durch Verdünnung mit (A) und/oder (B) erhaltenen Konzentrate können dementsprechend bis zu 5 Gew% des Alkalimetallsalzes der aliphatischen Monocarbonsäuren enthalten, bevorzugt bis zu 4 Gew%, besonders bevorzugt bis zu 3 Gew%, ganz besonders bevorzugt bis zu 2 Gew% und insbesondere bis zu 1 Gew%.

Die aus derartigen festen Zusammensetzungen durch Verdünnung mit (A) und/oder (B) erhaltenen Kühlmittel können dementsprechend bis zu 3 Gew% des Alkalimetallsalzes der aliphatischen Monocarbonsäuren enthalten, bevorzugt bis zu 2,5 Gew%, besonders bevorzugt bis zu 2 Gew%, ganz besonders bevorzugt bis zu 1,5 Gew% und insbesondere bis zu 1 Gew%.

Die Mengen der übrigen Komponenten (A) bis (E) bleiben hingegen wie beschrieben bei den Zusammensetzungen, die aus den festen Zusammensetzungen erhalten werden, die wenig oder keine aliphatischen Monocarbonsäuren enthalten.

### Nitrite

Bei den erfindungsgemäß in der Zusammensetzung ausgeschlossenen Nitriten handelt es sich um sämtliche anorganische Salze des Nitrit (NO₂⁻) sowie Salpetrigsäure (HNO₂). Typischerweise wird Nitrit in Form von Natriumnitrit oder Kaliumnitrit in Kühlmitteln eingesetzt oder wird durch die anorganischen Basen (D) in diese überführt, so daß insbesondere diese Individuen ausgeschlossen sind.

Da nicht ausgeschlossen werden kann, daß sich bei Anwesenheit von Nitrat als Inhibitor (C1) in den erfindungsgemäßen Zusammensetzungen durch Reduktion Nitrit bilden kann, gelten die erfindungsgemäßen Zusammensetzungen als nitritfrei wenn dessen Anteil in den erfindungsgemäßen Zusammensetzungen 0,2 Gew% nicht überschreitet, bevorzugt nicht mehr als 0,15 Gew%, besonders bevorzugt nicht mehr als 0,1 und ganz besonders bevorzugt nicht mehr als 0,05 Gew%. Speziell ist kein Nitrit enthalten.

### Herstellung

Die Herstellung der erfindungsgemäßen Zusammensetzungen erfolgt durch Mischen der Komponenten (A) bis (E) in geeigneten Apparaturen, bis eine homogene Mischung entsteht.

Geeignete Apparaturen sind Ultraschallapparaturen, Hochdruckhomogenisatoren, und Mühlen, wie beispielsweise 2-, 3-, 4- oder 5-Walzenmühlen, Minimühlen, Henschelmischer, Schüttelmühlen, Angmühlen, Zahnmühlen, Perlmühlen, Attritoren, Kolloidmühlen, Ultraschallhomogenisatoren, Ultra-Turrax-Rührer und Kugelmühlen, speziell Rührwerkskugelmühlen. Denkbar sind weiterhin Kneter mit ein- oder zwei Misch- und Knetwellen im Inneren des Apparates, in denen der axiale Transport durch den Apparat durch Anordnung von Förder-, Knet- und/oder Mischelementen, beispielsweise Scheibenelementen, Wellen, Schnecken, Blättern, Wischern oder Rotoren erfolgen kann.

Als geeignete Zeitdauer für das Mischen haben sich beispielsweise 5 Minuten bis 10 Stunden erwiesen, obwohl auch eine längere Zeitdauer denkbar ist. Bevorzugt ist eine Zeitdauer für das Mischen von 10 Minuten bis 4 Stunden.

Druck- und Temperaturbedingungen beim Mischen sind im Allgemeinen unkritisch, so hat sich beispielsweise Normaldruck als geeignet erwiesen. Als Temperaturen haben sich beispielsweise Temperaturen im Bereich von 10°C bis 100°C als geeignet erwiesen, bevorzugt 20 bis 80°C.

Das homogene Gemisch wird nach dem Mischen optional, aber bevorzugt gesiebt, beispielsweise um nach einer Kugelmahlung die Kugeln abzutrennen, und das Mahlgut anschließend zu Formkörpern verarbeitet, bevorzugt verpreßt, granuliert oder extrudiert.

Hinsichtlich der möglichen Geometrien der Formkörper existieren im Wesentlichen keine Beschränkungen. Beispielsweise sind unter anderem Pellets wie beispielsweise scheibenförmige Pellets, Pillen, Kugeln, Schuppen, Plättchen, Granulate, Extrudate wie beispielsweise Stränge, Waben, Gitter oder Hohlkörper zu nennen.

Bevorzugt kann das Verpressen und/oder Verformen mittels einer Kolbenpresse, Walzenpresse, Compoundieren, Pelletieren, Tablettieren, Extrudieren, Co-Extrudieren, Granulieren oder einer Kombination aus zwei oder mehr dieser Methoden erfolgen.

Ganz besonders werden Pellets und/oder Tabletten hergestellt.

Es kann von Vorteil sein, die erhaltenen Formkörper nach der Verformung mit einem Überzug (Coating) zu versehen, um ein Verbacken der Formkörper bei Lagerung zu verhindern. Ein solcher Überzug ist wasserlöslich ausgestaltet, damit er sich bei der späteren Herstellung der Superkonzentrate, Konzentrate oder Kühlmittel auflöst.

### Herstellung der Konzentrate

Im Rahmen der vorliegenden Schrift werden Kühlmittel, Konzentrate und Superkonzentrate anhand ihrer Zusammensetzung wie folgt definiert:

### Kühlmittel:

Flüssige Gefrierschutzmittel für Kühlsysteme mit Korrosionsschutzwirkung, enthaltend
- mindestens 40 Gew% Wasser (A)
- mindestens 30 Gew% Alkylenglykol, Alkylenglykolmonoalkylether und Glycerin (B),
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung bis 10, bevorzugt bis 7,5 und besonders bevorzugt bis 5 Gew% beträgt,
- der Anteil an aliphatischen Monocarbonsäuren an der gesamten Zusammensetzung 0,2 Gew% nicht übersteigt,
- der Anteil an Nitriten an der gesamten Zusammensetzung 0,05 Gew% nicht übersteigt und
- die Summe aller Komponenten stets 100 Gew% ergibt.

### Konzentrat

Flüssige Zusammensetzungen für die Zubereitung von Gefrierschutzmitteln für Kühlsysteme mit Korrosionsschutzwirkung, enthaltend
- nicht mehr als 15, bevorzugt nicht mehr als 10 und besonders bevorzugt nicht mehr als 5 Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist.

### Superkonzentrat

Flüssige Zusammensetzungen für die Zubereitung von Gefrierschutzmitteln für Kühlsysteme mit Korrosionsschutzwirkung, enthaltend
- nicht mehr als 15, bevorzugt nicht mehr als 10 und besonders bevorzugt nicht mehr als 5
   Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,05 bis 30, bevorzugt 1 bis 20 und besonders bevorzugt 2 bis 10 Gew% beträgt,
- der Anteil an aliphatischen Monocarbonsäuren an der gesamten Zusammensetzung 0,6 Gew% nicht übersteigt,
- der Anteil an Nitriten an der gesamten Zusammensetzung 0,2 Gew% nicht übersteigt und
- der Rest zu 100 Gew% mindestens ein Alkylenglykol, Alkylenglykolmonoalkylether oder Glycerin (B) ist.

Bei dem Kühlmittel handelt es sich um die Angabe einer Zusammensetzung für gemäßigte Breiten, die für extrem heiße (höherer Wasseranteil) oder extrem kalte Regionen (höherer Anteil an Komponente (B)) abweichen kann.

Ein Gegenstand der vorliegenden Erfindung ist ein Verfahren zur Herstellung eines Superkonzentrats, enthaltend
- nicht mehr als 15, bevorzugt nicht mehr als 10 und besonders bevorzugt nicht mehr als 5 Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,05 bis 30, bevorzugt 1 bis 20 und besonders bevorzugt 2 bis 10 Gew% beträgt,
- der Anteil an aliphatischen Monocarbonsäuren an der gesamten Zusammensetzung 0,6 Gew% nicht übersteigt,
- der Anteil an Nitriten an der gesamten Zusammensetzung 0,2 Gew% nicht übersteigt und
- der Rest zu 100 Gew% mindestens ein Alkylenglykol, Alkylenglykolmonoalkylether oder Glycerin (B) ist,
indem man eine erfindungsgemäße feste Zusammensetzung mit der entsprechenden Menge mindestens eines Alkylenglykols, Alkylenglykolmonoalkylethers oder Glycerin (B) versetzt.

Ein weiterer Gegenstand der vorliegenden Erfindung ist ein Verfahren zur Herstellung eines Konzentrats, enthaltend
- nicht mehr als 15, bevorzugt nicht mehr als 10 und besonders bevorzugt nicht mehr als 5 Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% nicht übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist,
indem man in einem ersten Schritt eine erfindungsgemäße feste Zusammensetzung mit mit der entsprechenden Menge mindestens eines Alkylenglykols, Alkylenglykolmonoalkylethers oder Glycerin (B) versetzt und so ein Superkonzentrat erhält, enthaltend
- nicht mehr als 15, bevorzugt nicht mehr als 10 und besonders bevorzugt nicht mehr als 5 Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,05 bis 30, bevorzugt 1 bis 20 und besonders bevorzugt 2 bis 10 Gew% beträgt,
- der Anteil an aliphatischen Monocarbonsäuren an der gesamten Zusammensetzung 0,6 Gew% nicht übersteigt,
- der Anteil an Nitriten an der gesamten Zusammensetzung 0,2 Gew% nicht übersteigt und
- der Rest zu 100 Gew% mindestens ein Alkylenglykol, Alkylenglykolmonoalkylether oder Glycerin (B) ist,
und diesem dann in einem zweiten Schritt die entsprechende Menge Wasser (A) zusetzt.

Ein weiterer Gegenstand der vorliegenden Erfindung ist ein Verfahren zur Herstellung eines Konzentrats, enthaltend
- nicht mehr als 15, bevorzugt nicht mehr als 10 und besonders bevorzugt nicht mehr als 5 Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% nicht übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist,
indem man einer erfindungsgemäßen festen Zusammensetzung die entsprechende Menge mindestens eines Alkylenglykols, Alkylenglykolmonoalkylethers oder Glycerin (B) sowie die entsprechende Menge Wasser (A) in beliebiger Reihenfolge zusetzt.

Ein weiterer Gegenstand der vorliegenden Erfindung ist ein Verfahren zur Herstellung eines Kühlmittels, enthaltend
- mindestens 40 Gew% Wasser (A)
- mindestens 30 Gew% Alkylenglykol, Alkylenglykolmonoalkylether und Glycerin (B),
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung bis 10, bevorzugt bis 7,5 und besonders bevorzugt bis 5 Gew% beträgt,
- der Anteil an aliphatischen Monocarbonsäuren an der gesamten Zusammensetzung 0,2 Gew% nicht übersteigt,
- der Anteil an Nitriten an der gesamten Zusammensetzung 0,05 Gew% nicht übersteigt und
- die Summe aller Komponenten stets 100 Gew% ergibt,
   indem man in einem ersten Schritt eine erfindungsgemäße feste Zusammensetzung mit der entsprechenden Menge mindestens eines Alkylenglykols, Alkylenglykolmonoalkylethers oder Glycerin (B) versetzt und so ein Superkonzentrat erhält, enthaltend
- nicht mehr als 15, bevorzugt nicht mehr als 10 und besonders bevorzugt nicht mehr als 5 Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,05 bis 30, bevorzugt 1 bis 20 und besonders bevorzugt 2 bis 10 Gew% beträgt,
- der Anteil an aliphatischen Monocarbonsäuren an der gesamten Zusammensetzung 0,6 Gew% nicht übersteigt,
- der Anteil an Nitriten an der gesamten Zusammensetzung 0,2 Gew% nicht übersteigt und
- der Rest zu 100 Gew% mindestens ein Alkylenglykol, Alkylenglykolmonoalkylether oder Glycerin (B) ist,
   und diesem dann in einem zweiten Schritt die entsprechende Menge Wasser (A) zusetzt und so ein Konzentrat erhält, enthaltend
- nicht mehr als 15, bevorzugt nicht mehr als 10 und besonders bevorzugt nicht mehr als 5 Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% nicht übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist,
und diesem dann in einem dritten Schritt die entsprechende Menge Wasser (A) zusetzt.

Ein weiterer Gegenstand der vorliegenden Erfindung ist ein Verfahren zur Herstellung eines Kühlmittels, enthaltend
- mindestens 40 Gew% Wasser (A)
- mindestens 30 Gew% Alkylenglykol, Alkylenglykolmonoalkylether und Glycerin (B),
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung bis 10, bevorzugt bis 7,5 und besonders bevorzugt bis 5 Gew% beträgt,
- der Anteil an aliphatischen Monocarbonsäuren an der gesamten Zusammensetzung 0,2 Gew% nicht übersteigt,
- der Anteil an Nitriten an der gesamten Zusammensetzung 0,05 Gew% nicht übersteigt und
- die Summe aller Komponenten stets 100 Gew% ergibt,
   indem man in einem ersten Schritt einer erfindungsgemäßen festen Zusammensetzung die entsprechende Menge mindestens eines Alkylenglykols, Alkylenglykolmonoalkylethers oder Glycerin (B) sowie die entsprechende Menge Wasser (A) in beliebiger Reihenfolge zusetzt und so ein Konzentrat erhält, enthaltend
- nicht mehr als 15, bevorzugt nicht mehr als 10 und besonders bevorzugt nicht mehr als 5 Gew% Wasser (A)
   als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
   mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% nicht übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist,
und diesem dann in einem zweiten Schritt die entsprechende Menge Wasser (A) zusetzt.

Die Vermischung und Auflösung der erfindungsgemäßen Zusammensetzung mit Alkylenglykol, Alkylenglykolmonoalkylether oder Glycerin (B) und/oder Wasser (A) erfolgt in der Regel durch Energieeintrag durch Scherenergie. Dies kann beispielsweise in dynamischen Mischapparaten, d.h. durch Vermischen mittels Rührer oder durch Umpumpen (Naturumlauf oder Zwangsumlauf) bzw. Umpumpen mit statischen Mischorganen wie statischen Mischern oder Düsen im Umpumpkreis, durch statische Mischapparate wie statische Mischer, Düsen, Blenden oder T-Stücke im Zulauf des Ansatzbehälters, oder durch dynamische Mischapparate wie Mischpumpen oder Rührkessel erfolgen.

Bevorzugt wird dabei die Flüssigkeit, also (A) und/oder (B) vorgelegt und die erfindungsgemäße feste Zusammensetzung in einem konstanten Strom oder in einer oder mehreren Portionen zugegeben.

Die Mischtemperatur beträgt in der Regel von 10 bis 80 °C, bevorzugt von 15 bis 70 °C und besonders bevorzugt von 20 bis 60 °C. Selbstverständlich kann man die Vermischung auch bei einer höheren oder niedrigeren Temperatur durchführen, solange die Komponenten sich unter den gewählten Bedingungen nicht zersetzen. Dies bringt jedoch in der Regel keine Vorteile.

Wie oben ausgeführt ist es möglich, bei der Herstellung des Kühlmittels aus der erfindungsgemäßen festen Zusammensetzung in einem beliebigen Schritt über die Verdünnung zum Superkonzentrat oder Konzentrat die anorganische Base (D) oder einen Teil davon zuzudosieren, um den angestrebten pH-Wert im fertigen Kühlmittel einzustellen, sofern die erfindungsgemäße feste Zusammensetzung noch nicht die vollständige Menge an (D) enthält.

Es stellt einen Vorteil der vorliegenden Erfindung dar, daß die erfindungsgemäßen, festen Zusammensetzungen zentral hergestellt werden, somit lediglich relativ kleine Mengen zu transportieren sind, und diese dann regional von Formulierern mit Komponenten (B) zu Superkonzentraten bzw. mit Komponenten (A) und (B) zu Konzentraten abgemischt werden.

Dies stellt insofern eine Verringerung der transportierten Mengen dar, da Alkylenglykol, Alkylenglykolmonoalkylether und Glycerin (B) üblicherweise breit verfügbar ist und somit leicht regional beschafft werden können.

Somit ist ein weiterer Gegenstand der vorliegenden Erfindung ein Verfahren zur Verringerung der mit einem Transport des Produktes verbundenen Emissionen, beispielsweise Stickoxid- und Schwefeloxid-Emissionen und insbesondere der Kohlenstoffdioxid-Emissionen, bevorzugt bestimmt als Carbon-Footprint oder als Ökobilanz, besonders bevorzugt gemäß DIN EN ISO 14021, DIN EN ISO 14067, hier besonders die Ausgabe 2019-02, DIN EN ISO 14044, hier besonders die Ausgabe 2006 + A1:2018 und/oder DIN EN ISO 14040, hier besonders die Ausgabe 2009-11, in dem man eine erfindungsgemäße feste Zusammensetzung an einem ersten Ort herstellt und von dort an einen zweiten Ort transportiert, wo man aus der erfindungsgemäßen festen Zusammensetzung durch Vermischen mit Alkylenglykol, Alkylenglykolmonoalkylether und Glycerin (B) ein Superkonzentrat und/oder Konzentrat herstellt.

Zur Bestimmung der Ökobilanz werden dabei bevorzugt die DIN EN ISO 14040, hier besonders die Ausgabe 2009-11 und/oder DIN EN ISO 14044, hier besonders die Ausgabe 2006 + A1:2018 zugrundegelegt.

Zur Bestimmung des Carbon-Footprint wird dabei bevorzugt DIN EN ISO 14067, hier besonders die Ausgabe 2019-02 zugrundegelegt.

Ein weiterer Gegenstand der vorliegenden Erfindung ist ein Verfahren zur Verringerung der Emissionen, insbesondere der Kohlenstoffdioxid-Emissionen, bevorzugt bestimmt als Carbon-Footprint oder Ökobilanz, besonders bevorzugt gemäß DIN EN ISO 14021, DIN EN ISO 14067, hier besonders die Ausgabe 2019-02, DIN EN ISO 14044, hier besonders die Ausgabe 2006 + A1:2018 und/oder DIN EN ISO 14040, hier besonders die Ausgabe 2009-11, in dem man eine erfindungsgemäße feste Zusammensetzung an einem ersten Ort herstellt und von dort an einen zweiten Ort transportiert, wo man aus der erfindungsgemäßen festen Zusammensetzung durch Vermischen mit Alkylenglykol, Alkylenglykolmonoalkylether und Glycerin (B) ein Superkonzentrat und/oder Konzentrat herstellt, und dieses Konzentrat an den Endanwender vertreibt, der aus dem Konzentrat durch Abmischen mit Wasser ein Kühlmittel an einem dritten Ort herstellt.

Es stellt einen Vorteil der erfindungsgemäßen festen Zusammensetzungen dar, daß man aus diesen Superkonzentrate und Konzentrate herstellen kann, die ihrerseits zur Herstellung von Kühlmitteln eingesetzt werden können.

Durch die geringeren zu transportierenden Mengen erreicht man dabei eine Verringerung der Emissionen, besonders der CO₂-Emissionen, beispielsweise bestimmt durch den Carbon Footprint, Ökobilanzierung oder gemäß DIN EN ISO 14021, DIN EN ISO 14067, hier besonders die Ausgabe 2019-02, DIN EN ISO 14044, hier besonders die Ausgabe 2006 + A1:2018 und/oder DIN EN ISO 14040, hier besonders die Ausgabe 2009-11.

Ein weiterer Vorteil der erfindungsgemäßen festen Zusammensetzungen besteht darin, daß aus ihnen Kühlmittel mit einer guten Inhibierung der Korrosion von Eisenwerkstoffen hergestellt werden können, obwohl sie sowohl auf Nitrit als auch auf freie aliphatische Monocarbonsäuren soweit deren Anwesenheit nicht technisch bedingt ist verzichten. Durch den Verzicht auf die zumeist flüssigen oder niedrigschmelzenden aliphatischen Monocarbonsäuren werden die erfindungsgemäßen festen Zusammensetzungen lagerstabil.

### Beispiele

Es wurden Formulierungen 1 bis 3 der Wirkstoffe von Kühlmitteln mit aliphatischen Carbonsäuren als Vergleich hergestellt und zu diesen dann erfindungsgemäße Formulierungen 4 bis 6 hergestellt, in denen die Bestandteile jeweils gleich gehalten wurden, jedoch die Anteile der aliphatischen Carbonsäuren durch Dicarbonsäuren ersetzt wurden. Somit folgende Paare der Formulierungen miteinander vergleichbar: 1 vs. 4, 2 vs. 5 und 3 vs. 6.

**Tabelle 1 [Angaben in Gew%]**

| Formulierung | 1 (Vgl) | 2 (Vgl) | 3 (Vgl) | 4 | 5 | 6 |
|---|---|---|---|---|---|---|
| Benztriazol, % | 1,55 | | | 1,55 | | |
| Sebazinsäure, % | 17,71 | 43,08 | 40,85 | 47,96 | 51,70 | 49,00 |
| Borax, % | 11,51 | | | 11,51 | | |
| Dodekandisäure, % | 0,77 | | | 0,77 | | |
| Tolutriazol, % | | 2,16 | 2,04 | | 2,16 | 2,04 |
| 2-Ethylhexansäure, % | 30,25 | | | 0 | | |
| Isononansäure, % | | 8,62 | 8,15 | | 0 | 0 |
| 2-Benzothiazolyl thioessigsäure, % | | 2,15 | 2,04 | | 2,15 | 2,04 |
| Natriummolybdat dihydrat, % | | 2,87 | 4,89 | | 2,87 | 4,89 |
| Wasser, % | 2,096 | 1,62 | | 2,096 | 1,622 | |
| Monoethylenglykol, % | 2,513 | 1,95 | | 2,513 | 1,945 | |
| Silicophosponat, % | 1,046 | 0,81 | | 1,046 | 0,809 | |
| Natriummetasilikat Pentahydrat, % | 2,514 | 1,95 | | 2,514 | 1,945 | |
| NaOH, % | 15,96 | | | 15,96 | | |
| KOH, % | 0,67 | 28,33 | 31,15 | 0,67 | 28,33 | 31,15 |
| Hartwasserstabilisator, % | 0,45 | 0,216 | 0,20 | 0,45 | 0,216 | 0,204 |
| Monoethylenglykol, % | 8,81 | 4,095 | 3,87 | 8,81 | 4,095 | 3,867 |
| Natriumnitrat, % | 4,16 | | | 4,16 | | |
| Phosphorsäure 85%, % | | 2,15 | 6,80 | | 2,15 | 6,80 |

Bei dem eingesetzten Silicophosphonat handelt es sich um die Verbindung gemäß Tabelle 1, Fußnote [3] der unveröffentlichten Europäischen Patentanmeldung mit der Anmeldungsnummer 20213979.6 und dem Einreichedatum 15. Dezember 2020.

Aus diesen Formulierungen wurden an einer Tablettenpresse mit aufgesetztem Manometer Tablette gepreßt. Dabei wurde kontinuierlich der Druck bis zur Fließgrenze (Druckkonstanz) erhöht. Ferner wurde der Tablettenpressling beim Entfernen aus dem Preßwerkzeug optisch und auf seine Eigenschaften begutachtet.

**Tabelle 2**

| Formulierung | Zustand | Druck, N/m² | Entfernung aus Presswerkzeug |
|---|---|---|---|
| 1 (Vgl) | kristallin, amorphe Bereiche | 10,4 | stark klebend |
| 2 (Vgl) | kristallin, amorphe Bereiche | 11,1 | klebt leicht |
| 3 (Vgl) | kristallin, amorphe Bereiche | 10,8 | klebt |
| 4 | kristallin | 10,9 | klebt nicht |
| 5 | kristallin | 11,5 | klebt nicht |
| 6 | kristallin | 11,5 | klebt nicht |

Man sieht, daß die Tabletten aus den erfindungsgemäßen Formulierungen kristalline Presslinge fertigbar sind, die leicht aus dem Presswerkzeug entfernbar sind.

Ferner weisen die Tabletten aus den erfindungsgemäßen Formulierungen eine ca. 0,5 N/m² höhere Fließgrenze auf, was ihre verbesserte Lagerbarkeit zeigt (geringe Verbackung bei Lagerung).

### Korrosionsbeispiele

Um zu zeigen, daß aus den erfindungsgemäßen festen Kühlmittelkonzentraten erhaltene Kühlmittel eine vergleichbar gute korrosionsinhibierende Wirkung zeigen wie konventionelle Nitrithaltige und Monocarbonsäure-haltige Kühlmittel wurden Korrosionsversuche gemäß DIN 51360, Teil 2 (Juli 1981) vorgenommen.
Dazu wurden jeweils 20 und 40 Vol%ige wäßrige Lösungen der jeweiligen Konzentrate hergestellt. Die Konzentrate bestanden in diesem Fall aus 90 Gew% Monoethylenglykol und 10 Gew% der jeweiligen Bestandteile aus der Tabelle 1.

Als Material wurden trockene Graugussspäne GG 25 gemäß DIN 1691 mit einer Spangröße von 3 bis 6 mm verwendet.

Die Bewertung des Korrosionsergebnisse erfolgte durch optische Begutachtung nach folgenden Kriterien auf einer fünfteiligen Bewertungsskala:

| Korrosionsgrad | Bedeutung | Beschreibung |
|---|---|---|
| 0 | keine Korrosion | unverändert |
| 1 | Spuren von Korrosion | höchstens 3 Korrosionsabzeichnungen, von denen keine einen Durchmesser von mehr als 1 mm hat |
| 2 | leichte Korrosion | nicht mehr als 1 % der Oberfläche verfärbt, aber mehr oder größere Korrosionsabzeichnungen als für Korrosionsgrad 1 |
| 3 | mäßige Korrosion | über 1%, aber nicht mehr als 5% der Oberfläche verfärbt |
| 4 | starke Korrosion | über 5% der Oberfläche verfärbt |

**Tabelle 3**

| Kühlmittel basierend auf | Konzentration | Korrosionsgrad |
|---|---|---|
| Formulierung 1 (Vgl) | 20 | 3 |
| Formulierung 4 | 20 | 2 |
| Formulierung 4 + 0,25 Gew% NaNO₂ | 20 | 2 |

In einer Konzentration von 40 Vol% zeigten alle Kühlmittel einen Korrosionsgrad von 0 (Null).

**Tabelle 4**

| Kühlmittel basierend auf | Konzentration | Korrosionsgrad |
|---|---|---|
| Formulierung 2 (Vgl) | 20 | 4 |
| Formulierung 5 | 20 | 4 |
| Formulierung 5 + 0,25 Gew% NaNO₂ | 20 | 3 |

In einer Konzentration von 40 Vol% zeigten alle Kühlmittel einen Korrosionsgrad von 0 (Null).

**Tabelle 5**

| Kühlmittel basierend auf | Konzentration | Korrosionsgrad |
|---|---|---|
| Formulierung 3 (Vgl) | 20 | 3 |
| Formulierung 6 | 20 | 3 |
| Formulierung 6 + 0,25 Gew% NaNO₂ | 20 | 2 |

In einer Konzentration von 40 Vol% zeigten alle Kühlmittel einen Korrosionsgrad von 0 (Null).

Man sieht anhand der Ergebnisse aus den Tabellen 3 bis 5, daß sich zur Erzielung eines vergleichbaren Korrosionsschutzes an Eisenwerkstoffen Nitrit und aliphatische Monocarbonsäure durch die erfindungsgemäßen Zusammensetzungen ersetzen lassen. Dabei wurde eine Abweichung um einen Korrosionsgrad im Rahmen der Meßgenauigkeit als vergleichbar angenommen.

## Patentansprüche

1. Nitritfreie, zur Herstellung flüssiger Gefrierschutzmittel für Kühlsysteme mit Korrosionsschutzwirkung geeignete feste Zusammensetzungen, enthaltend
- nicht mehr als 10, bevorzugt nicht mehr als 7,5 und besonders bevorzugt nicht mehr als 5 Gew% Wasser (A)
- nicht mehr als 10, bevorzugt nicht mehr als 7,5 und besonders bevorzugt nicht mehr als 5 Gew% Alkylenglykol, Alkylenglykolmonoalkylether und Glycerin (B),
als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung 90 bis 95 Gew% beträgt,
- der Anteil an aliphatischen Monocarbonsäuren an der gesamten Zusammensetzung 1 Gew% nicht übersteigt,
- der Anteil an Nitriten an der gesamten Zusammensetzung 0,25 Gew% nicht übersteigt und
- die Summe aller Komponenten stets 100 Gew% ergibt.

2. Zusammensetzungen gemäß Anspruch 1, **dadurch gekennzeichnet, daß** es sich bei Komponente (B) um Monoethylenglykol handelt.

3. Zusammensetzungen gemäß einem der vorstehenden Ansprüche, **dadurch gekennzeichnet, daß** Komponente (C1) eine Verbindung ausgewählt aus der Gruppe bestehend aus Silikaten, Boraten, Nitraten oder Phosphaten ist.

4. Zusammensetzungen gemäß einem der vorstehenden Ansprüche, **dadurch gekennzeichnet, daß** keine aromatische Monocarbonsäure anwesend ist.

5. Zusammensetzungen gemäß einem der vorstehenden Ansprüche, **dadurch gekennzeichnet, daß** es sich bei Verbindung (C3) um eine lineare Alkandicarbonsäure mit 6 bis 12 Kohlenstoffatomen handelt.

6. Zusammensetzungen gemäß einem der Ansprüche 1 bis 4, **dadurch gekennzeichnet, daß** Verbindung (C3) ausgewählt ist aus der Gruppe bestehend aus Bernsteinsäure, Maleinsäure, Fumarsäure, Glutarsäure, Adipinsäure, Pimelinsäure (Heptandisäure), Azelainsäure (Nonandisäure), Sebacinsäure (Dekandisäure), Undekandisäure, Dodekandisäure, sowie Alkyl- und Alkenylbernsteinsäuren und -glutarsäuren wie 2-Methylbutandisäure, 2-ethyl-3-methylbutandisäure, 2-Ethylpentandisäure, 2-Dodecylbutandisäure, 2-Dodecenylbutandisäure, 2-Phenylbutandisäure, 2-(p-Methyl phenyl) butandisäure, 2,2-Dimethylbutandisäure, 2,3,4-Trimethylpentandisäure, 2,2,3-Trimethylpentandisäure, Glutaconsäure (Pent-2-endisäure), Itaconsäure, Hex-2-endisäure, Hex-3-endisäure, 5-Methyl-hex-2-endisäure und 2,3-Diemethyl-pent-2-endisäure.

7. Zusammensetzungen gemäß einem der vorstehenden Ansprüche, **dadurch gekennzeichnet, daß** Verbindung (C4) ausgewählt ist aus der Gruppe bestehend aus Benzotriazol, Tolutriazol, (2-Benzothiazylthio)-essigsäure, 3-(2-Benzothiazylthio)-propionsäure und 2-Mercaptobenzthiazol.

8. Verfahren zur Herstellung von festen Zusammensetzungen gemäß einem der vorstehenden Ansprüche durch
- Mischen der Komponenten (A) bis (E) in geeigneten Apparaturen über einen Zeitraum von 5 Minuten bis 10 Stunden bei 10 bis 100 °C, bis eine homogene Mischung entsteht,
- optionaler Siebung des homogenen Gemischs, und
- anschließender Verarbeitung zu Formkörpern.

9. Verfahren zur Herstellung eines Superkonzentrats, enthaltend
- nicht mehr als 15, bevorzugt nicht mehr als 10 und besonders bevorzugt nicht mehr als 5 Gew% Wasser (A)
als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung 0,05 bis 30, bevorzugt 1 bis 20 und besonders bevorzugt 2 bis 10 Gew% beträgt,
- der Anteil an aliphatischen Monocarbonsäuren an der gesamten Zusammensetzung 0,6 Gew% nicht übersteigt,
- der Anteil an Nitriten an der gesamten Zusammensetzung 0,2 Gew% nicht übersteigt und
- der Rest zu 100 Gew% mindestens ein Alkylenglykol, Alkylenglykolmonoalkylether oder Glycerin (B) ist,
wobei man eine feste Zusammensetzung gemäß einem der Ansprüche 1 bis 7 mit der entsprechenden Menge mindestens eines Alkylenglykols, Alkylenglykolmonoalkylethers oder Glycerin (B) versetzt.

10. Verfahren zur Herstellung eines Konzentrats, enthaltend
- nicht mehr als 15, bevorzugt nicht mehr als 10 und besonders bevorzugt nicht mehr als
5 Gew% Wasser (A)
als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% nicht übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist,
wobei man in einem ersten Schritt eine feste Zusammensetzung gemäß einem der Ansprüche 1 bis 7 mit der entsprechenden Menge mindestens eines Alkylenglykols, Alkylenglykolmonoalkylethers oder Glycerin (B) versetzt und so ein Superkonzentrat erhält, enthaltend
- nicht mehr als 15, bevorzugt nicht mehr als 10 und besonders bevorzugt nicht mehr als 5 Gew% Wasser (A)
als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe
mit der Maßgabe, daß
- der Anteil an Komponenten Inhibitoren (C), anorganischen Basen (D) und Sonstigen (E) in Summe bezogen auf die gesamte Zusammensetzung 0,05 bis 30, bevorzugt 1 bis 20 und besonders bevorzugt 2 bis 10 Gew% beträgt,
- der Anteil an aliphatischen Monocarbonsäuren an der gesamten Zusammensetzung 0,6 Gew% nicht übersteigt,
- der Anteil an Nitriten an der gesamten Zusammensetzung 0,2 Gew% nicht übersteigt und
- der Rest zu 100 Gew% mindestens ein Alkylenglykol, Alkylenglykolmonoalkylether oder Glycerin (B) ist,
und diesem dann in einem zweiten Schritt die entsprechende Menge Wasser (A) zusetzt.

11. Verfahren zur Herstellung eines Konzentrats, enthaltend
- nicht mehr als 15, bevorzugt nicht mehr als 10 und besonders bevorzugt nicht mehr als 5 Gew% Wasser (A)
als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% nicht übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist,
wobei man einer festen Zusammensetzung gemäß einem der Ansprüche 1 bis 7 die entsprechende Menge mindestens eines Alkylenglykols, Alkylenglykolmonoalkylethers oder Glycerin (B) sowie die entsprechende Menge Wasser (A) in beliebiger Reihenfolge zusetzt.

12. Verfahren zur Herstellung eines Kühlmittels, enthaltend
- mindestens 40 Gew% Wasser (A)
- mindestens 30 Gew% Alkylenglykol, Alkylenglykolmonoalkylether und Glycerin (B), als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung bis 10, bevorzugt bis 7,5 und besonders bevorzugt bis 5 Gew% beträgt,
- der Anteil an aliphatischen Monocarbonsäuren an der gesamten Zusammensetzung 0,2 Gew% nicht übersteigt,
- der Anteil an Nitriten an der gesamten Zusammensetzung 0,05 Gew% nicht übersteigt und
- die Summe aller Komponenten stets 100 Gew% ergibt,
wobei man in einem ersten Schritt eine feste Zusammensetzung gemäß einem der Ansprüche 1 bis 7 mit der entsprechenden Menge mindestens eines Alkylenglykols, Alkylenglykolmonoalkylethers oder Glycerin (B) versetzt und so ein Superkonzentrat erhält, enthaltend
- nicht mehr als 15, bevorzugt nicht mehr als 10 und besonders bevorzugt nicht mehr als 5 Gew% Wasser (A)
als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung 0,05 bis 30, bevorzugt 1 bis 20 und besonders bevorzugt 2 bis 10 Gew% beträgt,
- der Anteil an aliphatischen Monocarbonsäuren an der gesamten Zusammensetzung 0,6 Gew% nicht übersteigt,
- der Anteil an Nitriten an der gesamten Zusammensetzung 0,2 Gew% nicht übersteigt und
- der Rest zu 100 Gew% mindestens ein Alkylenglykol, Alkylenglykolmonoalkylether oder Glycerin (B) ist,
und diesem dann in einem zweiten Schritt die entsprechende Menge Wasser (A) zusetzt und so ein Konzentrat erhält, enthaltend
- nicht mehr als 15, bevorzugt nicht mehr als 10 und besonders bevorzugt nicht mehr als
5 Gew% Wasser (A)
als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% nicht übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist,
und diesem dann in einem dritten Schritt die entsprechende Menge Wasser (A) zusetzt.

13. Verfahren zur Herstellung eines Kühlmittels, enthaltend
- mindestens 40 Gew% Wasser (A)
- mindestens 30 Gew% Alkylenglykol, Alkylenglykolmonoalkylether und Glycerin (B), als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung bis 10, bevorzugt bis 7,5 und besonders bevorzugt bis 5 Gew% beträgt,
- der Anteil an aliphatischen Monocarbonsäuren an der gesamten Zusammensetzung 0,2 Gew% nicht übersteigt,
- der Anteil an Nitriten an der gesamten Zusammensetzung 0,05 Gew% nicht übersteigt und
- die Summe aller Komponenten stets 100 Gew% ergibt,
wobei man in einem ersten Schritt einer festen Zusammensetzung gemäß einedem der Ansprüche 1 bis 7 die entsprechende Menge mindestens eines Alkylenglykols, Alkylenglykolmonoalkylethers oder Glycerin (B) sowie die entsprechende Menge Wasser (A) in beliebiger Reihenfolge zusetzt und so ein Konzentrat erhält, enthaltend
- nicht mehr als 15, bevorzugt nicht mehr als 10 und besonders bevorzugt nicht mehr als 5 Gew% Wasser (A)
als Inhibitoren (C)
- (C1) mindestens eine anorganische Verbindung ausgewählt aus der Gruppe bestehend aus Silikaten, Boraten, Nitraten, Molybdaten und Phosphaten
- (C2a) optional Benzoesäure als aromatische Monocarbonsäure
- (C3) mindestens eine organische Dicarbonsäuren, die 4 bis 20 Kohlenstoffatome aufweist
- (C4) mindestens eine Azol, bevorzugt mindestens eine Triazolverbindung
- (D) optional mindestens eine anorganische Base
- (E) mindestens einen sonstigen Bestandteil, ausgewählt aus der Gruppe bestehend aus Hartwasserstabilisatoren, Entschäumer, Farbstoffe und Bitterstoffe mit der Maßgabe, daß
- der Anteil an Komponenten Inhibitoren (C), anorganischen Basen (D) und Sonstigen (E) in Summe bezogen auf die gesamte Zusammensetzung 0,01 bis 10, bevorzugt 0,5 bis 7,5 und besonders bevorzugt 1 bis 5 Gew% beträgt,
- der Anteil an aliphatischen Monocarbonsäuren an der gesamten Zusammensetzung 0,4 Gew% nicht übersteigt,
- der Anteil an Nitriten an der gesamten Zusammensetzung 0,1 Gew% nicht übersteigt und
- der Rest zu 100 Gew% mindestens ein Alkylenglykol, Alkylenglykolmonoalkylether oder Glycerin (B) ist,
und diesem dann in einem zweiten Schritt die entsprechende Menge Wasser (A) zusetzt.

14. Verfahren zur Herstellung von Superkonzentraten, Konzentraten oder Kühlmitteln gemäß einem der Ansprüche 9 bis 13 aus einer festen Zusammensetzung gemäß einem der Ansprüche 1 bis 7, in dem man
- Komponente (A) und/oder (B) vorlegt,
- die feste Zusammensetzung gemäß einem der Ansprüche 1 bis 7 hinzugibt und
- mittels Energieeintrag durch Scherenergie vermischt.

15. Verfahren zur Verringerung der Emissionen, beispielsweise Stickoxid- und Schwefeloxid-Emissionen und insbesondere der Kohlenstoffdioxid-Emissionen, bevorzugt bestimmt als Carbon-Footprint, Ökobilanz oder gemäß DIN EN ISO 14021, DIN EN ISO 14067, hier besonders die Ausgabe 2019-02, DIN EN ISO 14044, hier besonders die Ausgabe 2006 + A1:2018 und/oder DIN EN ISO 14040, hier besonders die Ausgabe 2009-11, wobei man eine feste Zusammensetzung gemäß einem der Ansprüche 1 bis 7 an einem ersten Ort herstellt und von dort an einen zweiten Ort transportiert, wo man gemäß einem der Ansprüche 9 bis 11 aus der festen Zusammensetzung durch Vermischen mit Alkylenglykol, Alkylenglykolmonoalkylether und Glycerin (B) ein Superkonzentrat und/oder Konzentrat herstellt.
